# FASCICULE DE BREVET EUROPEEN

(11) **EP 2 060 744 B1**
(45) Date de publication et mention de la délivrance du brevet: **08.07.2015**
(21) Numéro de dépôt: 08166284.3
(22) Date de dépôt: 09.10.2008
(51) Int. Cl.: F01D 11/08, F01D 25/24

(54) **Etage de turbine ou de compresseur de turbomachine**
Turbinen- oder Kompressorstufe eines Turbotriebwerks
Stage of a turbine or turbomachine compressor

(30) Priorité: 13.11.2007 FR 0707943
(43) Date de publication de la demande: 20.05.2009
(73) Titulaire: Snecma, 75015 Paris (FR)
(72) Inventeur: Audeon, David, 91300 Massy (FR); Da Silva, David, 91260 Juvisy-sur-Orge (FR)
(74) Mandataire: Ramey, Daniel

(56) Documents cités:
- EP-A- 1 079 077
- EP-A- 1 099 826
- EP-A- 1 462 616
- EP-A- 1 593 813
- EP-A- 1 840 339
- FR-A- 2 413 543
- FR-A- 2 887 920

## Description

La présente invention concerne un étage de turbine ou de compresseur d'une turbomachine telle qu'un turboréacteur ou un turbopropulseur d'avion, comportant une roue à aubes montée rotative à l'intérieur d'un anneau cylindrique ou tronconique formé par des secteurs d'anneau accrochés circonférentiellement bout à bout sur un carter du compresseur ou de la turbine.

Chaque secteur d'anneau comprend à l'une de ses extrémités un rebord circonférentiel qui est serré radialement sur un rail annulaire de carter par l'intermédiaire d'un verrou élastique à section sensiblement en C, qui est engagé axialement sur le rail de carter et sur le rebord circonférentiel du secteur d'anneau (voir par exemple le document FR-A-2 887 920).

Dans la technique actuelle, les verrous sont disposés circonférentiellement bout à bout et forment donc des moyens de verrouillage annulaires qui s'étendent sur 360°. Les verrous ont chacun une largeur ou étendue angulaire qui est au moins égale à celle d'un secteur d'anneau, le nombre de verrous étant donc inférieur ou égal au nombre de secteurs d'anneau.

Lorsque les verrous ont chacun une largeur ou étendue angulaire qui est égale à celle des secteurs d'anneau, chaque verrou est en général engagé sur le rebord circonférentiel d'un seul secteur d'anneau de sorte que les extrémités latérales du verrou soient sensiblement alignées avec les bords longitudinaux du secteur d'anneau.

Chaque verrou est engagé sur le rail de carter et sur le rebord circonférentiel du secteur d'anneau avec une certaine précontrainte radiale. En fonctionnement, il apparaît un gradient de température relativement important en direction radiale dans chaque secteur d'anneau, ce qui entraîne un « décambrage » de ce secteur d'anneau. Ce phénomène se traduit essentiellement par une augmentation du rayon de courbure du secteur d'anneau, ce qui augmente les contraintes dans la partie médiane du verrou et peut réduire sa durée de vie.

L'invention a notamment pour but d'apporter une solution simple, efficace et économique à ce problème.

Elle propose à cet effet un étage de turbine ou de compresseur de turbomachine, comprenant au moins une roue à aubes entourée par un anneau sectorisé porté par un carter et comprenant un rebord circonférentiel serré radialement sur un rail annulaire du carter par des verrous élastiques à section sensiblement en C qui sont engagés axialement sur le rail de carter et sur le rebord de l'anneau, caractérisé en ce que chaque secteur d'anneau est maintenu sur le rail de carter par au moins un verrou, qui est engagé uniquement sur une partie d'extrémité circonférentielle du rebord du secteur d'anneau et sur une partie correspondante du rail de carter.

Ainsi, selon l'invention, les verrous sont à une certaine distance circonférentielle les uns des autres et sont engagés uniquement sur des parties d'extrémités des secteurs d'anneau et sur des parties correspondantes du rail. Aucun verrou n'est engagé sur une partie médiane d'un secteur d'anneau et sur la partie correspondante du rail de carter. La partie médiane de chaque secteur d'anneau peut donc se déplacer librement en direction radiale lors du fonctionnement de la turbomachine sans risquer de détériorer les verrous.

Chaque secteur d'anneau est ainsi maintenu radialement sur le rail de carter par au moins une de ses extrémités. Par opposition à la technique antérieure, les verrous ne sont donc pas disposés de manière jointive. Les moyens de verrouillage ne s'étendent pas de façon continue sur 360°, ce qui permet de réduire de manière significative leur masse. La précontrainte radiale des verrous suffit à les immobiliser en direction circonférentielle sur le rail de carter et sur les rebords des secteurs d'anneau. Des systèmes de blocage circonférentiel des verrous peuvent également être prévus dans le cas où la précontrainte radiale des verrous ne serait pas suffisante ou serait nulle. Ces verrous sont sensiblement identiques les uns aux autres.

Selon une autre caractéristique de l'invention, les verrous ont une largeur ou étendue angulaire qui est inférieure à celle d'un secteur d'anneau.

Chaque secteur d'anneau peut être maintenu sur le rail de carter par un seul verrou, ce verrou étant engagé sur une partie d'extrémité circonférentielle du rebord du secteur d'anneau et sur une partie correspondante du rail de carter. Le verrou peut maintenir radialement un seul secteur d'anneau, ou bien peut maintenir deux secteurs d'anneau lorsqu'il est monté à cheval sur deux secteurs d'anneau adjacents.

En variante, chaque secteur d'anneau est maintenu sur le rail de carter par deux verrous engagés sur les parties d'extrémité circonférentielle du rebord du secteur d'anneau et sur des parties correspondantes du rail de carter. Chacun de ces verrous peut retenir une partie d'extrémité du rebord du secteur d'anneau voire également une partie d'extrémité du rebord d'un secteur d'anneau adjacent si ce verrou est monté à cheval sur les rebords de ces deux secteurs d'anneau.

Les verrous peuvent être situés à distance les uns des autres en direction circonférentielle, cette distance étant par exemple supérieure ou égale à la largeur d'un verrou.

Chaque verrou peut avoir une largeur ou étendue angulaire qui est inférieure à environ la moitié, de préférence inférieure à environ le tiers, et par exemple inférieure à environ le quart, de celle d'un secteur d'anneau.

L'invention concerne encore un compresseur ou une turbine de turbomachine, caractérisé(e) en ce qu'il ou elle comprend au moins un étage de turbine ou de compresseur tel que décrit ci-dessus.

L'invention concerne également une turbomachine, telle qu'un turboréacteur ou un turbopropulseur d'avion, caractérisée en ce qu'elle comprend au moins un étage de turbine ou de compresseur tel que décrit ci-dessus.

L'invention sera mieux comprise et d'autres caractéristiques, détails et avantages de celle-ci apparaîtront plus clairement à la lecture de la description qui suit, faite à titre d'exemple non limitatif et en référence aux dessins annexés dans lesquels :
- la figure 1 est une demi-vue schématique partielle en coupe axiale d'un étage de turbine selon la technique antérieure ;
- la figure 2 est une vue schématique en perspective d'un secteur d'anneau et d'un verrou de l'étage de la figure 1 ;
- la figure 3 est une vue très schématique partielle de face du secteur d'anneau de la figure 2, vu de l'aval ;
- la figure 4 est une vue schématique en perspective d'un secteur d'anneau et d'un verrou de l'étage selon la présente invention ;
- la figure 5 est une vue schématique en perspective d'un secteur d'anneau et de deux verrous d'une variante de réalisation de l'invention ;
- la figure 6 est une vue schématique de dessus du secteur d'anneau et des verrous de la figure 5.

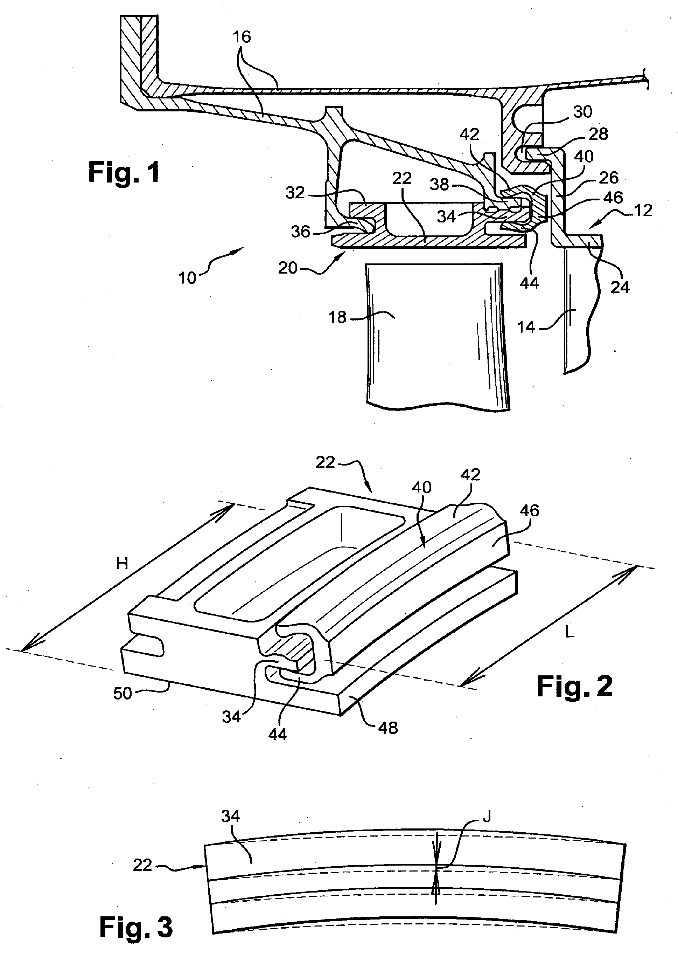

On se réfère d'abord à la figure 1 qui représente un étage de turbine 10 d'une turbomachine telle qu'un turboréacteur ou un turbopropulseur d'avion. Cet étage 10 comprend un distributeur 12 formé d'une rangée annulaire d'aubes fixes 14 portées par un carter 16 de la turbine, et une roue à aubes 18 montée en amont du distributeur 12 et tournant dans un anneau sectorisé 20 formé d'une pluralité de secteurs 22 qui sont portés circonférentiellement bout à bout par le carter 16 de la turbine.

Le distributeur 12 comprend deux parois de révolution externe 24 et interne (non visible), respectivement, qui délimitent entre elles la veine annulaire d'écoulement des gaz dans la turbine et entre lesquelles s'étendent radialement les aubes 14. Les moyens de fixation du distributeur comprennent au moins une patte radiale amont 26 reliée à sa périphérie externe à un rebord cylindrique 28 orienté vers l'amont et destiné à être engagé dans une rainure annulaire 30 orientée vers l'aval du carter 16.

Chaque secteur d'anneau 22 comprend à ses extrémités amont et aval des rebords circonférentiels 32, 34 d'accrochage sur le carter 16 de la turbine. Les rebords circonférentiels amont 32 des secteurs d'anneau sont orientés vers l'amont et sont engagés sur un rebord cylindrique 36 orienté vers l'aval du carter 16. Les rebords circonférentiels aval 34 des secteurs sont orientés vers l'aval et sont serrés radialement sur un rail cylindrique 38 du carter au moyen de verrous 40 à section en C dont l'ouverture est orientée axialement vers l'amont et qui sont engagés axialement par déformation élastique depuis l'aval sur le rail de carter 38 et les rebords circonférentiels aval 34 des secteurs d'anneau. Les rebords aval 34 des secteurs d'anneau et le rail 38 du carter ont sensiblement le même rayon de courbure.

Chaque verrou 40 comprend deux parois circonférentielles 42 et 44, radialement externe et radialement interne respectivement, qui sont reliées entre elles à leurs extrémités aval par une paroi radiale 46, et qui sont engagées respectivement à l'extérieur du rail de carter 38 et à l'intérieur des rebords aval 34 des secteurs d'anneau.

La paroi radiale 46 du verrou 40 est interposée axialement entre les extrémités aval du rail 38 et des rebords 34, et la paroi radiale 26 du distributeur 12 situé en aval, pour empêcher le verrou 40 de se déplacer axialement vers l'aval et de se désengager du rail de carter 38 et des rebords 34 des secteurs d'anneau.

Comme cela est visible en figure 2, chaque secteur d'anneau 22 est associé à un seul verrou 40 dans la technique antérieure. Le rail de carter 38 n'a pas été représenté dans cette figure pour des raisons de clarté. Le verrou a une largeur L ou étendue angulaire qui est sensiblement identique à celle H du secteur d'anneau. Dans la position de montage représentée en figure 2, les faces latérales 48 du verrou s'étendent dans le prolongement radial des faces latérales 50 du secteur d'anneau. Les faces latérales 48 de chaque verrou sont situées à une faible distance en direction circonférentielle des faces latérales des verrous adjacents qui sont reliés entre eux de manière quasi-jointive.

Le verrou 40 est de préférence engagé sur le rail de carter 38 et sur le rebord circonférentiel 34 du secteur d'anneau avec une certaine précontrainte radiale. Pour cela, la distance en direction radiale entre les parois circonférentielles 42, 44 du verrou non monté (ce qui correspond à la dimension radiale de l'ouverture du verrou) est inférieure, par exemple de quelques dixièmes de millimètre environ, à la somme des épaisseurs en direction radiale du rail de carter 38 et du rebord aval 34 du secteur. Le verrou 40 se déforme donc élastiquement en direction radiale, par éloignement de ses parois circonférentielles 42, 44, lors de son engagement axial sur le rail 38 et le rebord aval 34 du secteur.

En fonctionnement, le secteur d'anneau 22 est soumis à un gradient de température important en direction radiale, ce qui se traduit par un « décambrage » du secteur d'anneau qui a alors un rayon de courbure plus important qu'à l'état sans contrainte, son rayon de courbure devenant supérieur à celui du rail 38 du carter. On a représenté en figure 3 la forme et la position du rebord aval 34 du secteur d'anneau à l'état libre sans contrainte en traits continus, et à l'état « décambré » en traits pointillés. Le « décambrage » du secteur d'anneau provoque un déplacement radial J vers l'intérieur du rebord circonférentiel 34 du secteur d'anneau, ce déplacement J variant le long de la dimension circonférentielle du secteur et étant maximal au niveau de la partie médiane de ce secteur. Ce décambrage se traduit par une augmentation significative des contraintes dans la partie médiane du verrou 40, qui peuvent réduire sa durée de vie.

L'invention permet de remédier à ce problème en maintenant les secteurs d'anneau 22 sur le rail de carter 38 au moyen de verrous qui sont engagés uniquement sur les parties d'extrémités des rebords circonférentiels aval 34 des secteurs d'anneau. Les parties médianes des rebords 34 des secteurs sont alors libres de se déplacer en fonctionnement sans transmettre des efforts aux verrous qui sont suffisamment éloignés de ces zones de concentration de contraintes.

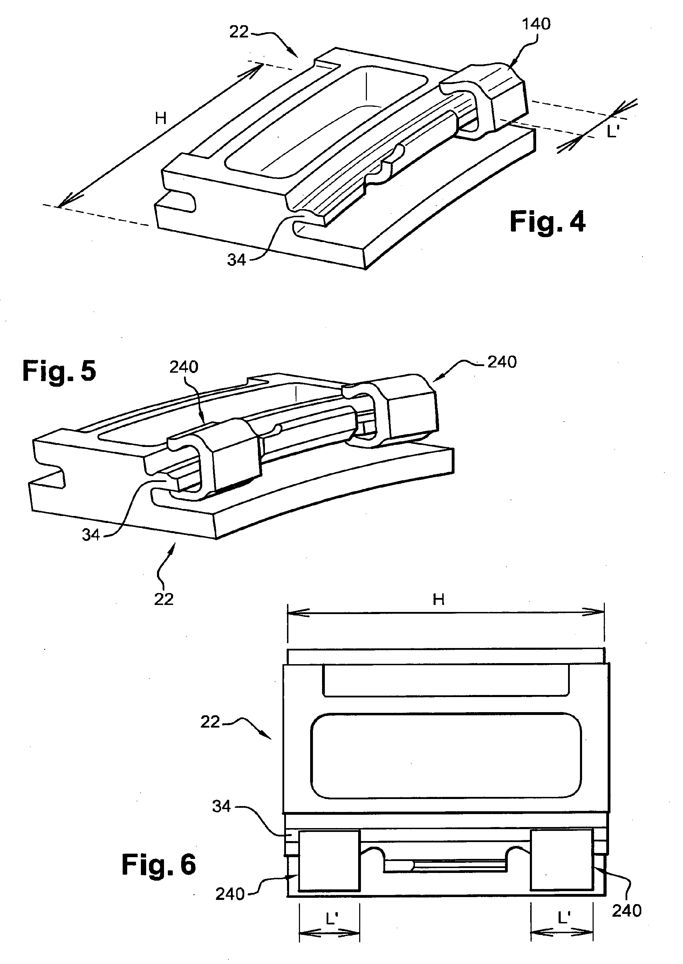

Dans l'exemple de réalisation représenté en figure 4, le verrou 140 a une largeur L' ou étendue angulaire très inférieure à celle du secteur d'anneau 22, celui-ci étant identique aux secteurs d'anneau de la technique antérieure. La largeur L' du verrou 140 est inférieure à la moitié, de préférence inférieure au tiers, et par exemple inférieure au quart, de la largeur H du secteur d'anneau 22. Chaque secteur d'anneau 22 est associé à un seul verrou 140 qui est engagé sur une partie d'extrémité du rebord 34 du secteur et sur une partie correspondante du rail de carter 38 (non représentée pour des raisons de clarté). Le nombre de verrous est donc dans ce cas identique au nombre de secteurs d'anneau.

Dans la variante de réalisation représentée aux figures 5 et 6, le secteur d'anneau 22 est associé à deux verrous 240 qui sont engagés sur les parties d'extrémité, respectivement, du rebord aval 34 du secteur d'anneau et sur des parties correspondantes du rail de carter 38. Le nombre de verrous est alors le double du nombre de secteurs d'anneau. Les verrous 240 sont sensiblement identiques entre eux et au verrou 140 de la figure 4 et sont situés à une distance circonférentielle relativement importante l'un de l'autre, cette distance circonférentielle correspondant par exemple à la somme des largeurs de deux ou trois verrous.

Comme dans la technique antérieure, les verrous 140 et 240 sont empêchés de se déplacer axialement vers l'aval par appui sur la paroi radiale 26 du distributeur 12 situé en aval (figure 1). La précontrainte radiale des verrous 140, 240, lorsqu'ils sont montés sur le rail de carter 34 et sur les rebords aval 38 des secteurs d'anneau, suffit pour les immobiliser en direction circonférentielle. Dans le cas où cette précontrainte radiale est nulle ou insuffisante pour immobiliser les verrous en direction circonférentielle, on prévoit des systèmes de blocage circonférentiel de ces verrous.

## Revendications

1. Etage de turbine ou de compresseur de turbomachine, comprenant au moins une roue (18) à aubes entourée par un anneau sectorisé (20) porté par un carter (16) et comprenant un rebord circonférentiel (34) serré radialement sur un rail annulaire (38) du carter par des verrous élastiques (140, 240) à section sensiblement en C qui sont engagés axialement sur le rail de carter et sur le rebord de l'anneau, **caractérisé en ce que** chaque secteur d'anneau est maintenu sur le rail de carter par au moins un verrou qui est engagé uniquement sur une partie d'extrémité circonférentielle du rebord du secteur d'anneau et sur une partie correspondante du rail de carter.

2. Etage selon la revendication 1, **caractérisé en ce que** les verrous (140, 240) ont une largeur (L') ou étendue angulaire qui est inférieure à celle (H) d'un secteur d'anneau (22).

3. Etage selon la revendication 1 ou 2, **caractérisé en ce que** chaque secteur d'anneau (22) est maintenu sur le rail de carter (38) par un seul verrou (140), ce verrou étant engagé sur une partie d'extrémité circonférentielle du rebord (34) du secteur d'anneau et sur une partie correspondante du rail de carter (38).

4. Etage selon la revendication 1 ou 2, **caractérisé en ce que** chaque secteur d'anneau (22) est maintenu sur le rail de carter (38) par deux verrous (240), ces verrous étant engagés respectivement sur les parties d'extrémité circonférentielle du rebord (34) du secteur d'anneau et sur des parties correspondantes du rail de carter (38).

5. Etage selon l'une des revendications précédentes, **caractérisé en ce que** les verrous (140, 240) sont situés à distance les uns des autres en direction circonférentielle, cette distance étant par exemple supérieure ou égale à la largeur ou à l'étendue angulaire d'un verrou.

6. Etage selon l'une des revendications précédentes, **caractérisé en ce que** chaque verrou (140, 240) a une largeur ou étendue angulaire qui est inférieure à environ la moitié de celle d'un secteur d'anneau (22).

7. Etage selon l'une des revendications précédentes, **caractérisé en ce que** chaque verrou (140, 240) a une largeur ou étendue angulaire qui est inférieure à environ le tiers de celle d'un secteur d'anneau (22).

8. Etage selon l'une des revendications précédentes, **caractérisé en ce que** chaque verrou (140, 240) a une largeur ou étendue angulaire qui est inférieure à environ le quart de celle d'un secteur d'anneau (22).

9. Etage selon l'une des revendications précédentes, **caractérisé en ce que** les verrous (140, 240) sont identiques les uns aux autres.

10. Compresseur ou turbine de turbomachine, caractérisé(e) en ce qu'il ou elle comprend au moins un étage de turbine ou de compresseur selon l'une des revendications précédentes.

11. Turbomachine, telle qu'un turboréacteur ou un turbopropulseur d'avion, **caractérisée en ce qu'**elle comprend au moins un étage de turbine ou de compresseur selon l'une des revendications 1 à 9.

## Patentansprüche

1. Turbinen- bzw. Kompressorstufe einer Turbomaschine bzw. eines Turbinentriebwerks, enthaltend zumindest ein Schaufelrad (18), das von einem sektorisierten Ring (20) umgeben ist, der von einem Gehäuse (16) getragen wird und eine umfängliche Randleiste (34) aufweist, die radial an einer ringförmigen Schiene (38) des Gehäuses über elastische Riegel (140, 240) mit im Wesentlichen C-förmigem Querschnitt verspannt ist, die axial an der Schiene des Gehäuses und an der Randleiste des Rings in Eingriff sind, **dadurch gekennzeichnet, dass** jeder Ringsektor über zumindest einen Riegel an der Schiene des Gehäuses gehalten wird, der nur an einem umfänglichen Endabschnitt der Randleiste des Ringsektors und an einem entsprechenden Abschnitt der Gehäuseschiene in Eingriff steht.

2. Stufe nach Anspruch 1, **dadurch gekennzeichnet, dass** die Riegel (140, 240) eine Breite (L') bzw. Winkelerstreckung haben, die kleiner als diejenige (H) eines Ringsektors (22) ist.

3. Stufe nach Anspruch 1 oder 2, **dadurch gekennzeichnet, dass** jeder Ringsektor (22) über einen einzigen Riegel (140) an der Gehäuseschiene (38) gehalten wird, wobei dieser Riegel an einem umfänglichen Endabschnitt der Randleiste (34) des Ringsektors und an einem entsprechenden Abschnitt der Gehäuseschiene (38) in Eingriff steht.

4. Stufe nach Anspruch 1 oder 2, **dadurch gekennzeichnet, dass** jeder Ringsektor (22) über zwei Riegel (240) an der Gehäuseschiene (38) gehalten wird, wobei diese Riegel an den umfänglichen Endabschnitten der Randleiste (34) des Ringsektors bzw. an den entsprechenden Abschnitten der Gehäuseschiene (38) in Eingriff stehen.

5. Stufe nach einem der vorangehenden Ansprüche, **dadurch gekennzeichnet, dass** die Riegel (140, 240) in Umfangsrichtung im Abstand voneinander liegen, wobei dieser Abstand beispielsweise größer oder gleich der Breite bzw. der Winkelerstreckung eines Riegels ist.

6. Stufe nach einem der vorangehenden Ansprüche, **dadurch gekennzeichnet, dass** jeder Riegel (140, 240) eine Breite bzw. Winkelerstreckung hat, die kleiner als etwa die Hälfte derjenigen eines Ringsektors (22) ist.

7. Stufe nach einem der vorangehenden Ansprüche, **dadurch gekennzeichnet, dass** jeder Riegel (140, 240) eine Breite bzw. Winkelerstreckung hat, die kleiner als etwa ein Drittel derjenigen eines Ringsektors (22) ist.

8. Stufe nach einem der vorangehenden Ansprüche, **dadurch gekennzeichnet, dass** jeder Riegel (140, 240) eine Breite bzw. Winkelerstreckung hat, die kleiner als etwa ein Viertel derjenigen eines Ringsektors (22) ist.

9. Stufe nach einem der vorangehenden Ansprüche, **dadurch gekennzeichnet, dass** die Riegel (140, 240) identisch zueinander sind.

10. Kompressor bzw. Turbine einer Turbomaschine bzw. eines Turbinentriebwerks, **dadurch gekennzeichnet, dass** er bzw. sie zumindest eine Turbinen- bzw. Kompressorstufe nach einem der vorangehenden Ansprüche aufweist.

11. Turbomaschine bzw. Turbinentriebwerk, wie etwa Turbostrahltriebwerk oder Turbopropellertriebwerk für Flugzeuge, **dadurch gekennzeichnet, dass** sie bzw. es zumindest eine Turbinen- bzw. Kompressorstufe nach einem der Ansprüche 1 bis 9 aufweist.

## Claims

1. A turbine or compressor stage for a turbomachine, the stage comprising at least one blade wheel (18) surrounded by a sectorized ring (20)carried by a casing (16) and including a circumferential rim (34) that is clamped radially against an annular rail (38) of the casing by means of resilient clamps (140, 240) that are substantially of C-shaped section and that are engaged axially on the casing rail and on the ring rim, **characterized in that** each ring sector is held against the casing rail by at least one clamp that is engaged solely on a circumferential end portion of the rim of the ring sector and on a corresponding portion of the casing rail.

2. A stage according to claim 1, **characterized in that** the clamps (140, 240) are of an angular extent or width (L') that is less than the angular extent or width (H) of a ring sector (22).

3. A stage according to claim 1 or 2, **characterized in that** each ring sector (22) is held against the casing rail (38) by a single clamp (140), the clamp being engaged on a circumferential end portion of the rim (34) of the ring sector and on a corresponding portion of the casing rail (38).

4. A stage according to claim 1 or 2, **characterized in that** each ring sector (22) is held against the casing rail (38) by two clamps (240), the clamps being engaged on respective circumferential end portions of the rim (34) of the ring sector and on corresponding portions of the casing rail (38).

5. A stage according to one of the preceding claims, **characterized in that** the clamps (140, 240) are spaced apart from one another in the circumferential direction by a distance, this distance being for example greater than or equal to the angular extent or width of a clamp.

6. A stage according to one of the preceding claims, **characterized in that** each clamp (140, 240) is of an angular extent or width that is less than about half the angular extent or width of a ring sector (22).

7. A stage according to one of the preceding claims, **characterized in that** each clamp (140, 240) is of an angular extent or width that is less than about one-third the angular extent or width of a ring sector (22).

8. A stage according to one of the preceding claims, **characterized in that** each clamp (140, 240) is of an angular extent or width that is less than about one-fourth the angular extent or width of a ring sector (22).

9. A stage according to one of the preceding claims, **characterized in that** the clamps (140, 240) are identical to one another.

10. A turbomachine compressor or turbine **characterized in that** it includes at least one turbine or compressor stage according to one of the preceding claims.

11. A turbomachine such as an airplane turboprop or turbojet **characterized in that** it includes at least one turbine or compressor stage according to claims 1 to 9.
